# EUROPEAN PATENT APPLICATION

(11) **EP 2 552 113 A1**
(43) Date of publication of application: **30.01.2013**
(21) Application number: 11759029.9
(22) Date of filing: 24.03.2011
(51) Int. Cl.: H04N 7/173

(54) **INTERRUPTION DISPLAY SYSTEM, CONTENT INFORMATION PROVISION SERVER DEVICE, AND CLIENT DEVICE**

(30) Priority: 01.06.2010 JP 2010125600; 25.03.2010 JP 2010069636
(71) Applicant: Panasonic Corporation, Kadoma-shi Osaka 571-8501 (JP)
(72) Inventor: FUKUOKA, Yudai, Chuo-ku Osaka 540-6207 (JP); NAKAGAWA, Seiichi, Chu-ku Osaka 540-6207 (JP); HATTORI, Toshikazu, Chuo-ku Osaka 540-6207 (JP)
(74) Representative: Grünecker, Kinkeldey, Stockmair & Schwanhäusser
(86) International application number: PCT/JP2011/001740
(87) International publication number: WO 2011/118220

(57) **Abstract**

There is provided an interruption display system that displays interruption display information at a suitable position when interrupt information transmitted from an external server is displayed in such a manner as being overlapped on buttons while contents transmitted from a server device are received and displayed by a client device. A content information providing server device (20) stores therein a script describing a display method for displaying interrupt information, and transmits the script to the client device (10) together with content information. An interrupt information providing server device (30) transmits interrupt information. The client device (10) displays content information, and executes a method described in the script received from the content information providing server device (20) when the interrupt information is transmitted from the interrupt information providing server device (30), and displays the interrupt information using a method described in the script.

## Description

### Technical Field

The present invention relates particularly to an interruption display system that displays interrupt information in a signal transmission system including a client apparatus and a server apparatus connected via a digital interface.

### Background Art

Conventionally, when contents are displayed on a display, an interruption display of OSD (On-Screen Display) is given as a method for displaying different information from the contents.

For example, a technique described in Patent Literature 1 is known as a technique of an interruption display using OSD. According to the technique, relative coordinate conversion of touch coordinate information and button positional information shown in a DVD menu is carried out by an arithmetic apparatus, at an effective time of a touch operation, to thereby determine whether or not the touch coordinate information is matched with the button positional information (whether or not the coordinate is within a range from a start point of a horizontal coordinate and a vertical coordinate to an end point of the coordinate). Then, according to the technique, when the touch coordinate information and the button positional information are matched with each other, a selecting operation and a deciding operation (executing operation) of a select button is carried out. Thus, an index display is enabled without hiding the select button positioned in an original menu display screen.

Further, as a conventional technique, a travel forcing function for prohibiting an operation during traveling a vehicle is known as an operation method utilizing a touch panel of a navigation apparatus installed in the vehicle.

For example, a technique described in Patent Literature 2 is known as a technique of the travel forcing function. According to the technique, colors of drawing elements displayed in the screen are selectively controlled, in accordance with a determination signal showing whether the vehicle is traveling or stopped. Thus, an input key can be easily identified for prohibiting the operation of apparatuses during traveling, and therefore stability during traveling can be enhanced.

Further, car navigation apparatuses, car audio-visual (AV) apparatuses, and the like, which are equipped with a display section such as a display and an input section such as a touch panel installed in the vehicle, are popular and widely used. Some of such apparatuses are constructed so that a client apparatus including the display section, and a content information providing server apparatus including a function providing section, are separately formed for the purpose of facilitating the installation of the apparatuses.

In such a system in which the client apparatus and the content information providing server apparatus are separately formed, the content information providing server apparatus can be operated from the client apparatus by utilizing a method for executing a script by the client apparatus, the script being transmitted from the content information providing server apparatus and realizing a user interface (remote UI).

### Citation List

### Patent Literature

PTL 1 Japanese Patent Application Laid-Open No. 2004-133499
PTL 2 Japanese Patent Application Laid-Open No. 7-191612

### Summary of Invention

### Technical Problem

However, in the system utilizing the remote UI, positional information of the select button in the menu display screen is not known by the client apparatus. Therefore, in the system, even if the method described in the Patent Literature 1 is utilized, the client apparatus cannot perform an interruption display of OSD without hiding the select button positioned in the menu display screen.

Further, in the system, when interrupt information transmitted to the client apparatus from an external apparatus, which is not included in the system of the remote UI, is received and displayed by the client apparatus, the operation of the input buttons on the menu screen can not be restricted.

An object of the present invention is to provide an interruption display system capable of displaying interrupt information and menu operating buttons, and the like so as not to be overlapped on each other, even in an environment where the remote UI is utilized.

Further object of the present invention is to provide an interruption display system capable of restricting the operation performed to the input buttons on the menu screen, by displaying the interrupt information sent from an external server apparatus which is not included in the system of the remote UI in such a manner as being overlapped on the input buttons, even in the environment where the remote UI is utilized.

### Solution to Problem

The interruption display system according to the present invention employs a configuration to include: a content information providing server apparatus that transmits contents and a script; an interrupt information providing server apparatus that transmits interrupt information, which is information to be temporarily displayed; and a client apparatus that receives the contents, the script, and the interrupt information, and displays the contents and displays the interrupt information based on the script, wherein: the content information providing server apparatus includes a script storage section that stores the script describing a display position of the interrupt information in the client apparatus, the client apparatus includes: a display data generating section that displays the contents on a display section, the contents being received from the content information providing server apparatus; and a client apparatus control section that displays the interrupt information on the display section, in accordance with a display position of the interrupt information described in the script received from the content information providing server apparatus, when the interrupt information is received from the interrupt information providing server apparatus while the contents are displayed.

### Advantageous Effects of Invention

According to the present invention, a method for displaying interrupt information can be determined by a server apparatus that transmits the contents, and therefore the display method performed to the interrupt information sent from the external server apparatus can be freely determined for each content. For example, the interrupt information can be displayed avoiding positions of buttons in the contents; information desired to be focused can be freely determined and displayed when a plurality of different kinds of interrupt information is received; and the interrupt information can be displayed in such a manner as being overlapped on the input buttons in the contents for restricting the function.

### Brief Description of Drawings

FIG.1 is a block diagram of an interruption display system according to Embodiment 1 of the present invention;
FIG.2 is a flowchart showing an operation of the interruption display system according to Embodiment 1 of the present invention;
FIG.3 is a view for describing a method for displaying interrupt information according to Embodiment 1 of the present invention;
FIG.4 is a view for describing a variation of the method for displaying interrupt information, in a case that variation occurs in contents transmitted from a content information providing server apparatus, according to Embodiment 1 of the present invention;
FIG.5 is a flowchart showing an operation in a case that variation occurs in the contents transmitted from the content information providing server apparatus, according to Embodiment 1 of the present invention;
FIG.6 is a view for describing the method for displaying interrupt information according to Embodiment 1 of the present invention;
FIG.7 is a block diagram of an interruption display system according to Embodiment 2 of the present invention;
FIG.8 is a view showing processing at the time when the same interrupt information is simultaneously displayed on different client apparatuses, according to Embodiment 2 of the present invention;
FIG.9 is a view showing processing at the time when the same interrupt information is simultaneously displayed on different client apparatuses, according to Embodiment 2 of the present invention;
Fig.10 is a block diagram of an interruption display system according to Embodiment 3 of the present invention;
FIG.11 is a view showing processing at the time when the interrupt information is received from different interrupt information providing server apparatuses, according to Embodiment 3 of the present invention; and
FIG.12 is a view showing processing at the time when the interrupt information is received from different interrupt information providing server apparatuses, according to Embodiment 3 of the present invention.

### Description of Embodiments

Now, embodiments of the present invention will be described in detail, with reference to the accompanying drawings.

### (Embodiment 1)

An interruption display system according to Embodiment 1 of the present invention will be described hereafter, with reference to the drawings.

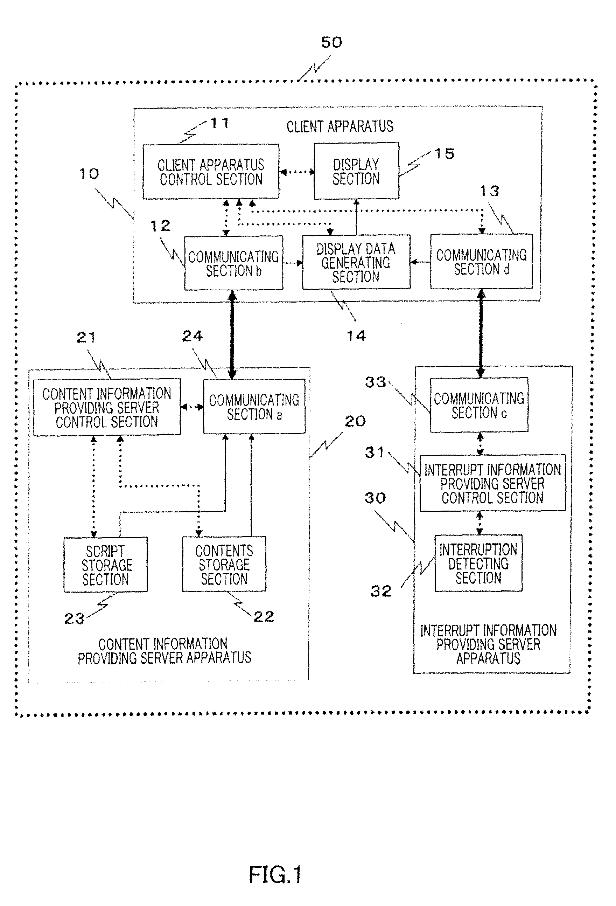

FIG.1 is a block diagram of the interruption display system according to Embodiment 1 of the present invention. Display system 50 of Embodiment 1 of the present invention comprises client apparatus 10, content information providing server apparatus 20, and interrupt information providing server apparatus 30. Content information providing server apparatus 20 is connected to client apparatus 10 via a transmission path, and interrupt information providing server apparatus 20 is also connected to client apparatus 10 by a transmission path, thus carrying out transmission/reception of data.

Client apparatus 10 is, for example, a navigation apparatus having a touch panel and a display screen or a rear display apparatus. Content information providing server apparatus 20 is, for example, a navigation apparatus not having a display screen, a CD player apparatus, a DVD player apparatus, a BD player apparatus, a TV tuner, or a mobile phone. Interrupt information providing server apparatus 30 is, for example, an in-vehicle server, an ETC apparatus, or a mobile phone.

Client apparatus 10, content information providing server apparatus 20, and interrupt information providing server apparatus 30 are respectively constructed as separate bodies. Thus, there is an advantage that flexibility in terms of where to install the display system 50 in a vehicle is enhanced, and any one of the apparatuses can be carried out to outside the vehicle.

Each apparatus constituting interruption display system 50 of Embodiment 1 includes a structure in each apparatus as will be described hereafter. Then, the apparatuses constituting interruption display system 50 work together to perform operations that will be described hereafter, thereby the interruption display is performed.

A user operates content information providing server apparatus 20 so that content information outputted from content information providing server apparatus 20 is processed by client apparatus 10, thereby viewing the contents. In this state, when an interruption occurs at a timing unexpected by the user, interrupt information providing server apparatus 30 detects the interruption and transmits interrupt information to client apparatus 10.

When the interrupt information is received from interrupt information providing server apparatus 30, client apparatus 10 displays the received interrupt information, based on a script describing a method for displaying interrupt information including "a position not overlapped on an operating button already displayed on client apparatus 10" transmitted from content information providing server apparatus 20. This is more specifically explained as follows, using an example in which a display is used as the client apparatus, a BD player apparatus is used as the content information providing server apparatus, and a mobile phone is used as the interrupt information providing server apparatus.

The user plays a BD by the BD player apparatus and the display receives data for playing the BD, including data for operating buttons for operating functions of the BD player apparatus, so that the data for paying the BD is outputted to the user as video or sound. In this state, an incoming call arrives at the mobile phone in some cases at a timing not expected by the user.

In this case, when a message of notifying the user of an incoming call to the mobile phone is transmitted to the display in a form of text data, and an interruption display is shown on the display, the display receives the script "describing the display position where the message is not overlapped on the operating buttons for operating the BD player apparatus at the time". Based on the script, a layout of the screen to be shown on the display is reconstructed and displayed.

Wherein, the "interruption display," refers to a display of warning, alert, or a message for temporarily promoting a confirmation of the user at a timing unexpected by the user, or a function of displaying the warning, the alert, or the message; and a temporary display of highly urgent contents, or a function of displaying such contents. The "interrupt information" is the information to be temporarily displayed, which is used for the aforementioned interruption display, and refers to the information or data that constitutes images or character strings displayed at the time of the interruption display.

The description of "interruption occurs" indicates a state where there is a necessity for displaying the interruption display for promoting a confirmation of the user at a timing not expected by the user, irrespective of the operation by the user. For example, in a case where interrupt information providing server apparatus 30 is a mobile phone, a timing of receiving an incoming call or an e-mail message corresponds to the state; in a case of an ETC apparatus, a timing of passing through a gate corresponds to the state; and in a case of a VICS receiving apparatus, a timing of receiving traffic information and the like corresponds to the state.

The description of "the interruption is detected" or "to detect the interruption" indicates a state where interrupt information providing server apparatus 30 detects a signal which is changed when the interruption occurs.

The "method for displaying" interrupt information refers to an agreement at the time of displaying the interrupt information on the display section of client apparatus 10, and includes at least information regarding a position (positional information) of the interrupt information and information regarding timing (timing information) to show the interrupt information, in order to display the interrupt information in such a manner as avoiding positions of already displayed contents.

Further, as the method for displaying interrupt information, a shape and a color of the interrupt information as well as information for flickering the interrupt information may also be added.

An internal structure of each apparatus constituting interruption display system 50 of Embodiment 1 will be respectively described in detail hereafter.

Client apparatus 10 includes client apparatus control section 11, communicating section b12, communicating section d13, display data generating section 14, and display section 15, as main components. Client apparatus 10 is an apparatus for receiving data transmitted from content information providing server apparatus 20 and interrupt information providing server apparatus 30, and displaying the received data on the display.

Client apparatus control section 11 includes a CPU, a ROM, and a RAM, for example. The CPU executes computer programs stored in the ROM, using the RAM as a work area.

Client apparatus control section 11 is connected to communicating section b12, communicating section d13, display data generating section 14, and display section 15, so that communication is mutually carried out among them. Client apparatus control section 11 performs control so that data received from communicating section b12 and communicating section d13 is transmitted to display data generating section 14, and video data displayed on display section 15 is generated by display data generating section 14.

Communicating section b12 receives a script and contents transmitted from content information providing server apparatus 20, and transmits them to display data generating section 14. The script describes a mechanism for determining a position at which the interrupt information is displayed, for example. The contents are, for example, video data, audio data, and buttons for operating the video data.

When the interrupt information is detected by interrupt information providing server apparatus 30, communicating section d13 receives the interrupt information from interrupt information providing server apparatus 30 and transmits the received data to display data generating section 14.

Display data generating section 14 receives the script and contents transmitted from communicating section b12, receives the interrupt information transmitted from communicating section d13, and generates the video data to be displayed on display section 15.

Display section 15 is a display, for example, and receives the contents and the video data including the interrupt information, which have been generated by display data generating section 14, so as to be displayed thereon.

The interrupt information is a message, for example. A display position of the interrupt information on display section 15 and the timing of displaying the interrupt information on display section 15 are determined based on the script which is previously prepared by content information providing server apparatus 20.

Content information providing sever apparatus 20 includes content information providing server control section 21, contents storage section 22, script storage section 23, and communicating section a24, as main components. Content information providing server apparatus 20 is an apparatus for storing the script and contents to be displayed on display section 15 in client apparatus 10, and transmitting the script and contents to client apparatus 10.

Content information providing server control section 21 includes a CPU, a ROM, and a RAM, for example. The CPU executes computer programs stored in the ROM, using the RAM as a work area.

Content information providing server control section 21 is connected to contents storage section 22, script storage section 23, and communicating section a24, so that communication is mutually carried out among them. Content information providing server control section 21 performs control so that the contents stored in contents storage section 22 and the script stored in script storage section 23 are transmitted to communicating section a24, and the contents and the script transmitted to communicating section a24 are transmitted to client apparatus 10.

Contents storage section 22 stores contents to be displayed on display section 15, and transmits the contents to communicating section a24, wherein a general memory element is used.

Script storage section 23 stores the script for determining an interruption display method in display data generating section 14, and transmits the script to communicating section a24, wherein a general memory element is used, similarly to contents storage section 22. Contents storage section 22 and script storage section 23 may be used as an integrally formed body.

Communicating section a24 receives the contents transmitted from contents storage section 22, and the script transmitted from script storage section 23, and transmits the contents and the script to client apparatus 10.

Interrupt information providing server apparatus 30 includes interrupt information providing server apparatus control section 31, interruption detecting section 32 that detects an interruption, and communicating section c33. The interrupt information providing server apparatus 30 transmits a message of detecting the interruption and the interrupt information to client apparatus 10 when the interruption is detected by interruption detecting section 32.

Regarding the interrupt information transmitted by interrupt information providing server apparatus 30, the display position and the display timing are previously determined and described in the script stored in script storage section 23 in content information providing server apparatus 20.

Interrupt information providing server control section 31 includes a CPU, a ROM, and a RAM, for example. The CPU executes the computer programs stored in the ROM, using the RAM as a work area.

Interrupt information providing server control section 31 is connected to interruption detecting section 32 and communicating section c33, so that communication is mutually carried out among them. Interrupt information providing server control section 31 performs control for transmitting the interrupt information to client apparatus 10 when the interrupt information is detected by interruption detecting section 32.

Interruption detecting section 32 is a section for transmitting the interrupt information to interrupt information providing server apparatus control section 31 as text data when the interrupt information, such as a message, is received and detected for example, wherein a general communication module is used.

Communicating section c33 transmits the interrupt information to client apparatus communicating section d13 when the interrupt information is detected by interruption detecting section 32.

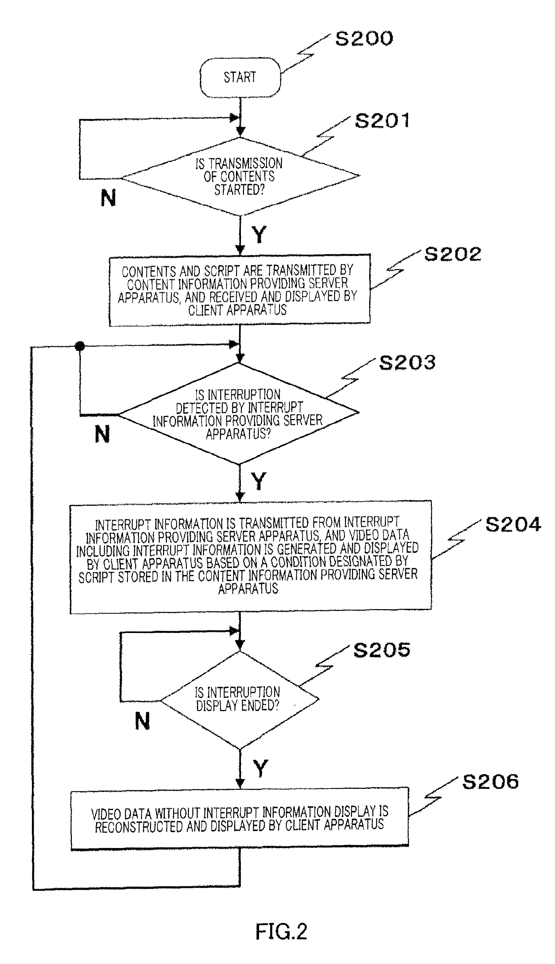

In display system 50 thus configured, an overall processing thereof will be described hereafter, including the processing of the interruption display. FIG.2 is a flowchart showing an operation of interruption display system 50 according to an embodiment of the present invention.

When interruption display system 50 is started, content information providing server 20 waits for a timing of transmitting the script and the contents stored inside (step S 201). For example, content information providing server apparatus 20 waits for the timing of transmitting the script designating an interruption display position stored in script storage section 23, and transmitting the contents such as video data and buttons for operating the video data stored in contents storage section 22, to communicating section a24.

At a timing of transmitting the script and the contents by content information providing server apparatus 20 ("Yes" in step S 201), the script and the contents are transmitted to client apparatus 10 from communicating section a24. Further, processing for generating the video data displayed on display data generating section 14 is performed, and the generated video data is displayed on display section 15 (step S 202).

After the video data is displayed on display section 15 in step S202, client apparatus control section 11 waits until the interruption is detected by interruption detecting section 32 (step S 203).

When the interrupt information is detected by interruption detecting section 32 ("Yes" in step S 203), the interrupt information is transmitted to client apparatus 10 by communicating section c33, and the interrupt information is received by display data generating section 14 via communicating section d13.

When the interrupt information is received, processing is performed by display data generating section 14 in accordance with a script that designates the method for displaying interrupt information prepared previously by content information providing service apparatus 20. Subsequently, The video data displaying the interrupt information is generated again and is transmitted to display section 15, and the video data updated by display section 15 is displayed again on display section 15 (step S 204).

The video data with no interrupt information is generated again by display data generating section 14 at a timing of satisfying a condition of ending the interruption display (for example, at the time of pressing an erase button displayed within the interrupt information for erasing the interrupt information, or after elapsing a previously determined time period of displaying the interrupt information) ("Yes" in step S 205), while the interrupt information is displayed (step S 205). The updated video data is displayed again on display section 15 (step S 206). Client apparatus control section 11 waits until the interrupt information is detected again by interruption detecting section 32.

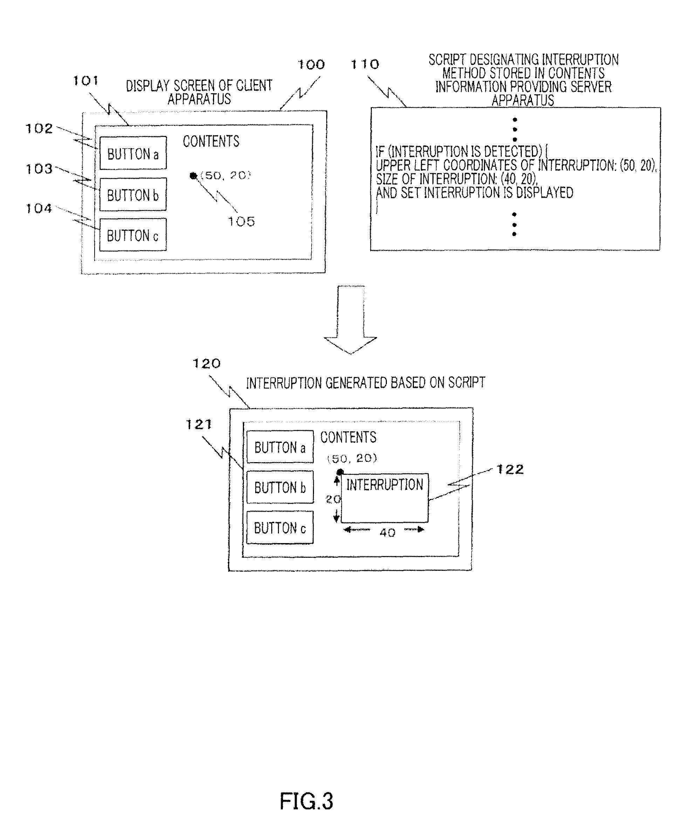

Processing operation (1) of interruption display system 50 that displays the interrupt information on display section 15 of client apparatus 10 will be described hereafter, with reference to FIG.3.

First, the video data generated by display data generating section 14 in content information providing server apparatus 20 is displayed in display screen 100 displayed on display section 15 of client apparatus 10 in a state that the interruption display is not detected, based on contents 101 transmitted from content information providing server apparatus 20 (for example, video data, and data regarding arrangement of button a102, button b103, and button c104) and script 110 (describing, for example, interruption display position coordinates 105).

Script 110 includes a description for determining coordinates 105 of the interruption position, and a size of an interruption display area, in contents 101 displayed by client apparatus 10.

The method for displaying interrupt information (including position and timing, for example) can be determined on the side of content information providing server apparatus 20, by way of previously preparing script 110 designating the method for displaying interrupt information in content information providing server apparatus 20.

Thus, the display position of the interrupt information can be determined, in the display of the interrupt information, by content information providing server apparatus 20 so as not to be overlapped on any buttons, in consideration of positions of button a102, button b103, and button c104, which are displayed in contents 101 displayed by the client apparatus.

Next, description contents of script 110 will be described. Description contents of script 110 regarding display of the interrupt information is determined as follows. For example, as shown in FIG.3, it is assumed that button a 102 to button c104 are arranged vertically at a left side in front view of display screen 100.

In this case, positional information (expressed by coordinates, for example) and size information of button a 102 to button c104 is previously determined, and therefore a free space, which does not disturb the operation of button a102 to button c 104 (not overlapping on buttons) when these buttons are operated even if the interrupt information is displayed, is previously known in the display screen.

Accordingly, an arbitrary point and a size of the interrupt information in the free space can be determined. For example, script 110 in the display screen as shown in FIG.3 can be described as follows.

When an interruption is detected (when a condition in an if-sentence of a first line of script 110 is satisfied), script 110 includes a description for processing of setting upper left coordinates of the display position of the interrupt information at (50, 20) (second line of script 110), and setting the size of the interrupt information at (40, 20) (third line of script 110), so that the interrupt information determined in the first to third lines of script 110 is displayed on display section 15 (fourth line of script 110).

When the interruption is detected and the interrupt information is transmitted to client apparatus 10 from interrupt information providing server apparatus 30, processing is performed by display data generating section 14 in accordance with script 110, the video data including interrupt information display 122 is re-constructed, and the re-constructed data is displayed on display section 15 as display screen 120.

Next, regarding interruption display system 50 described above, an operation in a case where there is a change in the contents transmitted by content information providing server apparatus 20 will be described.

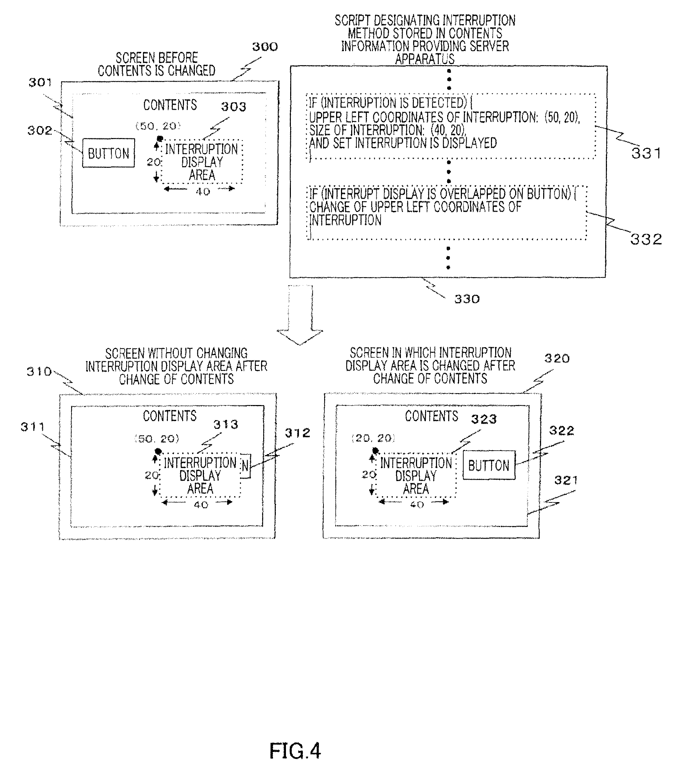

FIG.4 is a view showing an operation when the buttons for operating the video data are overlapped on the interruption display area, due to generation of the change in the contents.

When interruption display system 50 is operated, and the interrupt information is displayed for the first time, button 302 and interruption display area 303 in contents 301 are displayed so as not to be overlapped in screen 300 displayed by client apparatus 10.

An overlapped display of button 302 and interruption display area 303 is avoided by performing the processing in accordance with source code 331 described in script 330.

Next, when the contents are changed after displaying first contents 301 and contents 311 including button 312 are displayed anew, and in this state, when the interrupt information is displayed in a state where button 312 and interruption display area 313 are overlapped on each other, a display of button 312 is invisible and the operation utilizing the button can not be performed.

In order to cope with such a situation, overlapping of button 312 and interruption display area 313 can be avoided, by way of previously describing, in source code 332, the processing for changing the position of interruption display area 313.

Source code 332 includes a description for the processing of changing the upper left coordinates of the interrupt information to be executed by display data generating section 14, when the interruption display is overlapped on the button.

Button 322 and interruption display area 323 are displayed so as not to be overlapped on each other in screen 320 displayed on client apparatus 10 after execution of source code 332.

As described above, overlapping of the button and the interruption display area in the contents can be avoided by way of describing the processing for changing the interruption display area in source code 332 of script 330 that designates an interruption method.

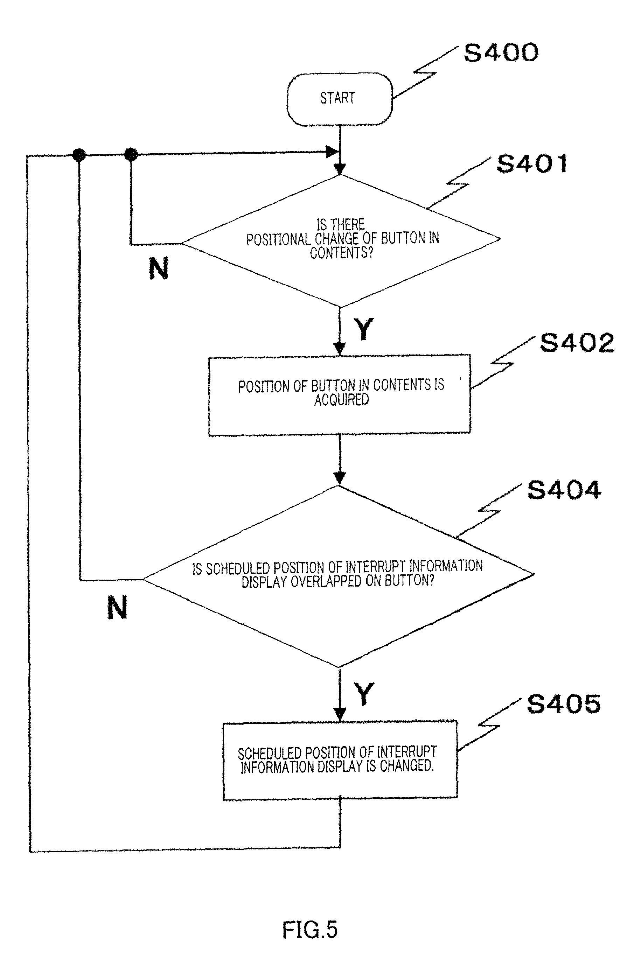

Regarding interruption display system 50 that is operated to change the display position of the interrupt information as described above, an operation of content information providing server apparatus 20 after detecting the interrupt information will be described, with reference to a flowchart of FIG.5. The flowchart of FIG.5 is described having a detection time of the interrupt information as a start.

When the content information providing server apparatus 20 is started, the contents and the script are transmitted from content information providing server apparatus 20, in response to a request from client apparatus 10 (step S 400), and thereafter content information providing server apparatus 20 waits until the request for changing the script is transmitted from client apparatus 10 (step S 401).

When content information providing server apparatus 20 receives the request for changing the contents and the script ("Yes" in step S 401), the position of the button described in the script is acquired by content information providing server apparatus 20 (step S 402).

When the display position of the button described in the script is overlapped on the position of the interruption display in content information providing server apparatus 20 ("Yes" in step S 404), the display position of the interrupt information is changed (step S 405).

With a structure of the interruption display system 50 as described above, the position of the interrupt information display, the timing, and the like can be determined on the server side that provides the contents by performing the processing,

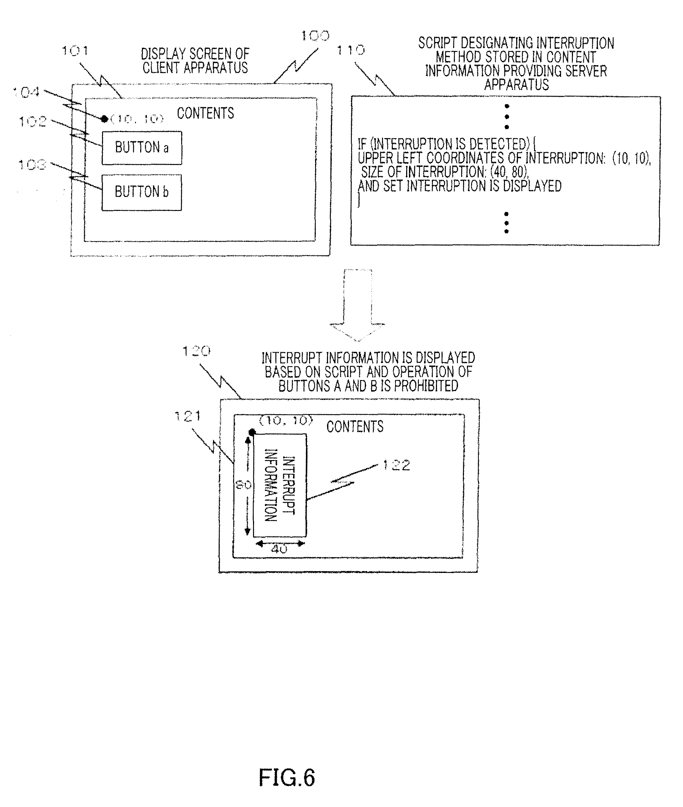

Processing operation (2) of interruption display system 50, at the time when the interrupt information is displayed on display section 15 of client apparatus 10, will be described with reference to FIG.6.

First, the video data generated by display data generating section 14 in content information providing server apparatus 20 is displayed in display screen 100 displayed on display section 15 of client apparatus 10 in a state where the interruption is not detected, based on contents 101 (including video data, and data regarding arrangement of button a102 and button b103, for example) and script 110 (describing interruption display position coordinates 105, for example), which have been transmitted from content information providing server apparatus 20.

Script 10 includes a description for determining coordinates 104 of the interruption position and the size of the interruption display area, in contents 101 displayed by client apparatus 10.

The display method of the interrupt information (including position and timing, for example) can be determined on the side of content information providing server apparatus 20, by way of previously preparing script 110 designating the method for displaying interrupt information in content information providing server apparatus 20.

Thus, in the display of the interrupt information, the display position of the interrupt information that overlaps on the button and the size of the display can be determined by content information providing server apparatus 20 for restricting the operation of each button, in consideration of the positions of button a102 and button b103 displayed within contents 101 displayed by the client apparatus.

Next, description contents of script 110 will be described hereafter. The description contents of script 110 regarding the display of the interrupt information is determined as follows. For example, it is assumed that button a102 and button b103 of the contents as shown in FIG.6 are arranged vertically at the left side in front view of display screen 100.

In this case, the positional information (expressed by coordinates, for example) and the size information of button a 102 and button b103 are previously determined, and therefore an area for displaying the interrupt information in such a manner as being overlapped on the buttons is previously known for restricting the operation of button a102 and button b103.

Accordingly, one point at which the interrupt information is displayed and the size of the interrupt information can be determined. For example, script 110 for the display screen as shown in FIG.6 can be described as follows.

When an interruption is detected (when the condition in the if-sentence of the first line of script 110 is satisfied), script 110 includes an description for processing of setting upper left coordinates of the display position of the interrupt information at (10, 10) (second line of script 110), and setting the size of the interrupt information at (40, 80) (third line of script 110), so that the interrupt information determined in the first to third lines of script 110 is displayed on display section 15 (fourth line of script 110).

When the interruption is detected and the interrupt information is transmitted to client apparatus 10 from interrupt information providing server apparatus 30, processing is performed by display data generating section 14 in accordance with script 110, video data including interrupt information display 122 is re-constructed, and the re-constructed data is displayed on display section 15 as display screen 120.

In script 110, interrupt information display 122 can be displayed in such a manner as being overlapped on button a102 and button b103 for restricting the operation of button a102 and button b103 in contents 101, by way of designating the display position and the size of interrupt information display 122.

Note that in interruption display system 50 described in the present embodiment, each function of interrupt information providing server apparatus control section 31 included in interrupt information providing server apparatus 30, interruption detecting section 32, and communicating section c33 may be included in client apparatus 10. By having the function in client apparatus 10, the method for displaying interrupt information can be determined by content information providing server apparatus 20, even when the interrupt information is generated by client apparatus 10.

In interruption display system 50 described in the present embodiment, as a route of transmitting the interrupt information, the interrupt information may be transmitted to content information providing server apparatus 20 from communicating section c33, and then may be transmitted to client apparatus 10 via communicating section a24,

Further, as the interrupt information transmitted from interrupt information providing server apparatus 30, not only text data but also pulse data, image data, audio data, and video data may be transmitted.

As the interrupt information transmitted from interrupt information providing server apparatus 30, processing of transmitting a source code described in the script to client apparatus 10 from interrupt information providing server apparatus 30 and processing of interpreting the script carried out by client apparatus 10 (for example, displaying the interrupt information with a pull down menu, or displaying the interrupt information with a button, etc.) may also be performed.

By transmitting the script from interrupt information providing server apparatus 30 as the interrupt information, for example, an operation of transmitting a plurality of pieces of interrupt information from interrupt information providing server apparatus 30, and an operation of selecting the interrupt information displayed by the pull down menu described in the script can be performed.

When the interruption is detected and the interrupt information display is displayed on display section 15, the display of the contents data may be temporarily halted in a case where the contents data transmitted from content information providing server apparatus 20 is the video data. Thus temporarily halting the display of the contents data can avoid a state where the content data is played while the interrupt information is displayed and therefore the contents data can not be viewed during the display of the interrupt information.

According to the present embodiment, after the interrupt information is displayed and the display of the interrupt information is ended, it is assume that the screen is returned to the screen before the interrupt information is displayed. However, a function for not allowing the screen to return to an original display screen is also acceptable. For example, by not allowing the screen to return to the original display screen, the display of the interrupt information can remain on a current screen in a state of a small display of the interrupt information, after the interruption display is set to a full screen display.

Further, regarding the interrupt information displayed in such a manner as being overlapped on the input buttons in the contents data, it is assumed that the interrupt information is displayed in such a manner as being overlapped on the input buttons. However, it is also acceptable to make the interruption display translucent so that the input buttons can be recognized. Thus, the user can recognize the existence of the input buttons, even if the interrupt information is displayed and the operation of the input buttons is prohibited.

Further, in the present embodiment, it is assumed that the interrupt information is displayed in such a manner as being overlapped on all input buttons in the contents data. However, it is also acceptable to display the interrupt information in such a manner as being overlapped on only a part of the input buttons. Thus, the input buttons for which an operation is prohibited can be flexibly changed in accordance with the interrupt information.

Further, in the present embodiment, it is assumed that the interrupt information is displayed in such a manner as being overlapped on the input buttons in the contents data and the operation of the input buttons is restricted. However, it is also acceptable to show that the operation of the input buttons is restricted by way of changing the color, shape, or size of the input buttons when the interrupt information is received by the client apparatus. Thus, it is possible to show that the operation of the input buttons is restricted using various methods.

### (Embodiment 2)

An interruption display system according to Embodiment 2 of the present invention will be described hereafter, with reference to the drawings.

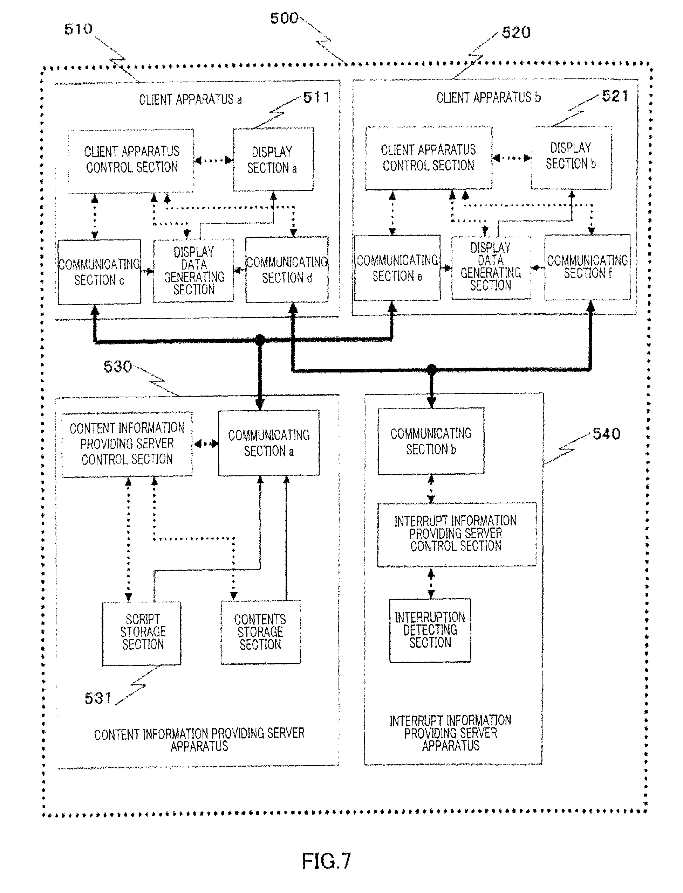

FIG.7 is a block diagram of the interruption display system according to Embodiment 2 of the present invention. Interruption display system 500 of Embodiment 2 of the present invention includes client apparatus a510, client apparatus b520, content information providing server apparatus 530, and interrupt information providing server apparatus 540.

A difference between Embodiment 1 and Embodiment 2 is that, in the interruption display system of Embodiment 2, there is provided client apparatus a510 that is connected to each of content information providing server apparatus 530 and interrupt information providing server apparatus 540 via a transmission path and that carries out transmission and reception of data. Further, another difference between Embodiment 1 and Embodiment 2 is that, in Embodiment 2, there is provided client apparatus b520 that is connected to each of content information providing server apparatus 530 and interrupt information providing server apparatus 540 via the transmission path and that carries out transmission and reception of data.

Another difference between Embodiment 1 and Embodiment 2 is that, in Embodiment 2, description of processing for performing interrupt information display on display section a 511 and display section b521 using a different display method (for example, the size of the displayed interrupt information is set to be different, or the display time is set to be different) is added to the script that describes the interruption display method, the script being stored in script storage section 531.

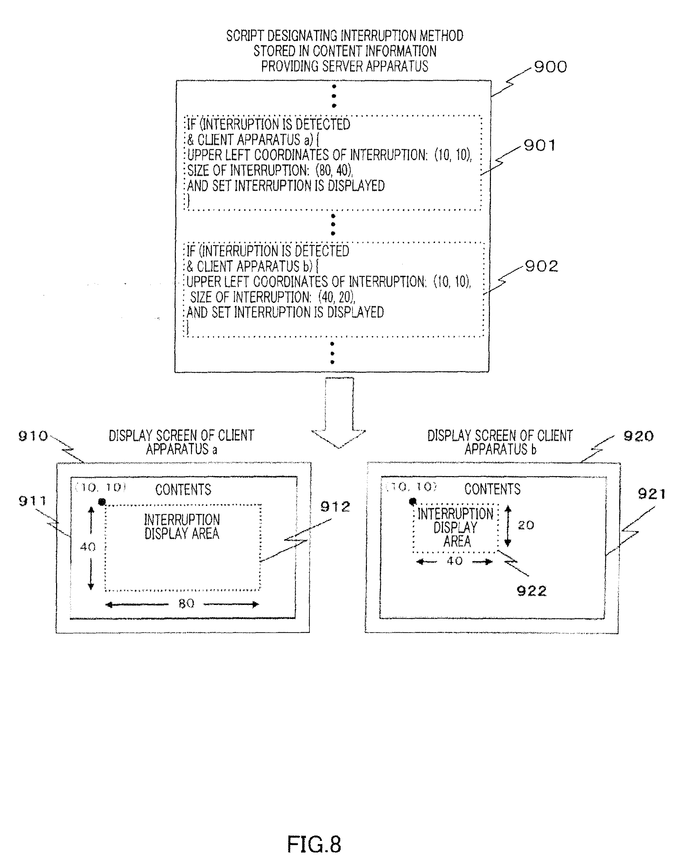

Processing operation (1) in interruption display system 500 shown in FIG.7 will be described hereafter, with reference to FIG.8.

In the description hereafter, as an example, an explanation will be given for a case where processing of setting different sizes between the interrupt information displayed by client apparatus a510 and the interrupt information displayed by client apparatus b520.

Script 900 stored in script storage section 531 describes the processing for performing different interrupt information display on display section a511 and display section b521. Source code 901 describes the processing for performing the interruption display on display section a511 of client apparatus a 510.

Source code 902 describes the processing for performing the interruption display on display section b521 of client apparatus b520. By designating different sizes of the interruption display in line 4 of source code 901 and line 4 of source code 902, the size of interruption display area 912 displayed in display screen 910 of client apparatus a510 and the size of interruption display area 922 displayed in display screen 920 of client apparatus b520 can be set to be different from each other.

As described above, according to Embodiment 2, script 900 stored in script storage section 531 in content information providing server apparatus 530 describes that the interruption display can be performed by a display method suitable to each of the client apparatuses, by providing the processing of setting different interruption display methods for performing interruption display displayed carried out by client apparatus a510 and client apparatus b520.

Note that as the processing of employing a different display method in each client apparatus as described above, a display size is set to be different in each client apparatus. However, it is also acceptable that propriety of displays is defined in each client apparatus, a length of the display time is set to be different, the display timing is set to be different, or display contents are set to be different (for example, a video is displayed by one of the client apparatuses and only audio is displayed by the other client apparatus).

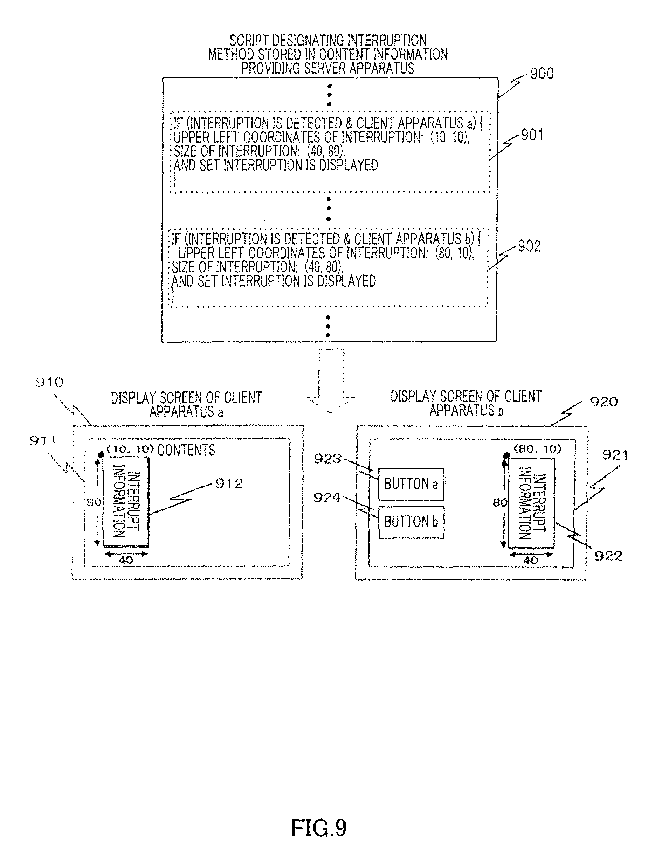

Next, processing operation (2) in interruption display system 500 shown in FIG.7 will be described, with reference to FIG.9.

In the description hereafter, as an example, explanation will be given for the processing in which a display position of the interrupt information displayed by client apparatus a510, and a display position of the interrupt information displayed by client apparatus b520 are set to be different from each other.

Script 900 stored in script storage section 531 describes the processing for performing different interrupt information displays on display section a511 and display section b521. Source code 901 describes the processing for performing the interruption display on display section a511 of client apparatus a 510.

Source code 902 describes the processing for performing the interruption display on display section b521 of client apparatus b520. In client apparatus a510, based on the processing described in line 4 of source code 901, the interrupt information is displayed in such a manner as being overlapped on the input buttons, so that the operation of the input buttons can be restricted. Meanwhile, in client apparatus b520, based on the processing described in line 4 of source code 902, the interrupt information is displayed so as not to be overlapped on input button a923 and input button b924, so that the operation of the input buttons is set in an operable state.

Thus, based on the processing described in line 2 of source code 901 and line 2 of source code 902, presence or absence of the restriction of the operation of the input buttons can be specified individually in each client apparatus, by way of displaying the interrupt information at different positions in each client apparatus.

Note that, as the processing for employing different display methods in each client apparatus as described above, the display position is set to be different in each client apparatus. However, it is also acceptable to define whether the interrupt information can be displayed or not in each client apparatus. Thus, presence/absence of the interrupt information display can be specified individually in each client apparatus.

Further, it is also acceptable that presence/absence of the display in a form where the input buttons can be recognized (for example, the display is made translucent) is specified individually in each client apparatus. Further, the number of the input buttons displayed in such a manner as being overlapped on the interrupt information in each client apparatus, may be specified individually in each client apparatus.

### (Embodiment 3)

An interruption display system according to Embodiment 3 of the present invention will be described hereafter, with reference to the drawings.

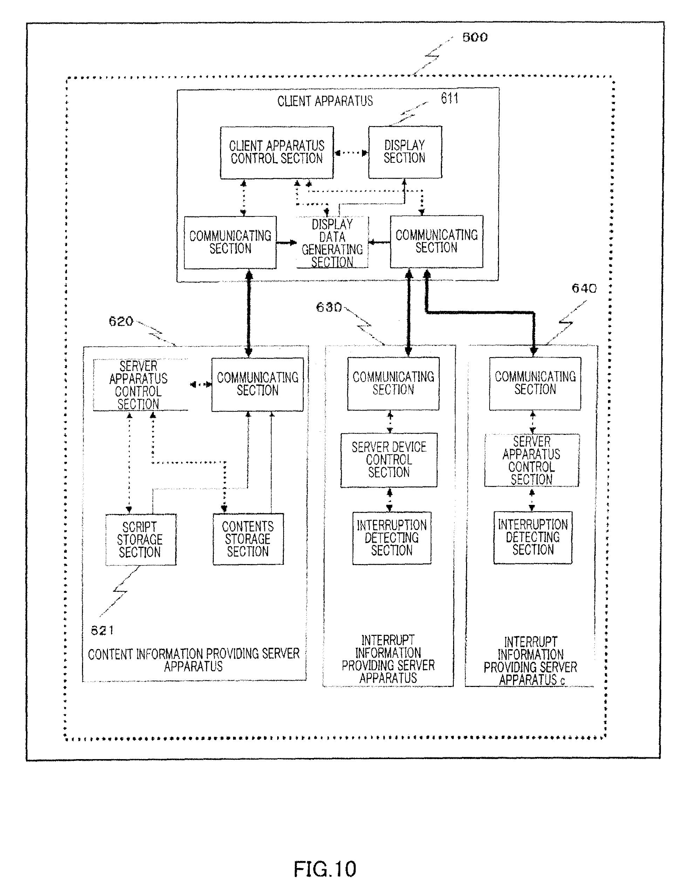

FIG.10 is a block diagram of the interruption display system according to Embodiment 3 of the present invention. Interruption display system 600 according to Embodiment 3 of the present invention includes client apparatus 610, content information providing server apparatus 620, interrupt information providing server apparatus 630, and interrupt information providing server apparatus c640.

A difference between Embodiment 1 and Embodiment 3 is that, in the interruption display system of Embodiment 3, there is provided the interrupt information providing server apparatus 630 that detects an interruption and carries out transmission and reception of data to/from client apparatus 610 which is connected to the information providing server apparatus 630 via a transmission path, and there is also provided interrupt information providing server apparatus c640 that similarly detects an interruption and carries out transmission and reception of data to/from client apparatus 610 which is connected to interrupt information providing server apparatus c640 via a transmission path.

As a further difference from Embodiment 1, a description of the processing of the interrupt information display using a different display method to be performed to the interrupt information transmitted from interrupt information providing server apparatus 630 and interrupt information providing server apparatus c640 is added to the script stored in script storage section 621.

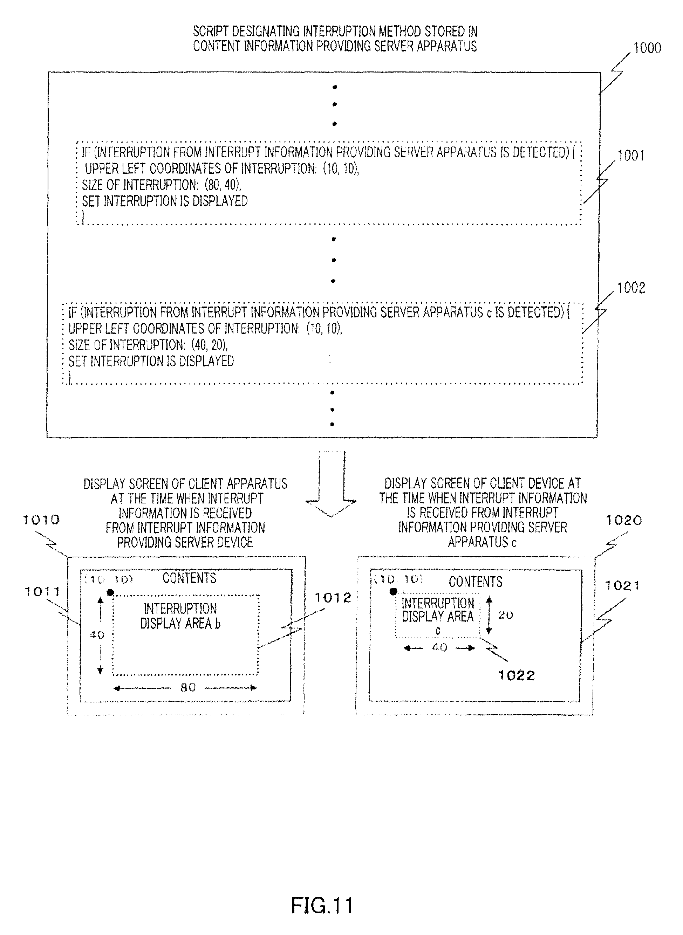

Processing operation (1) in interruption display system 600 shown in FIG.10 will be described hereafter, with reference to FIG.11.

Script 1000 stored in script storage section 621 describes the processing of different interrupt information displays to be performed to the interrupt information transmitted from interrupt information providing server apparatus 630 and interrupt information providing server apparatus c640. Source code 1001 describes the processing of designating the display method for the interrupt information transmitted from interrupt information providing server apparatus 630.

Source code 1002 describes the processing of designating the display method for the interrupt information transmitted from interrupt information providing server apparatus c640.

The size of interruption display area b1012 designating an area to be displayed when the interrupt information is received from interrupt information providing server apparatus 630, and the size of interruption display area c1022 designating an area to be displayed when the interrupt information is received from interrupt information providing server apparatus 640 can be set to be different from each other, by way of designating the different sizes of the interruption display in line 3 of source code 1001 and line 3 of source code 1002.

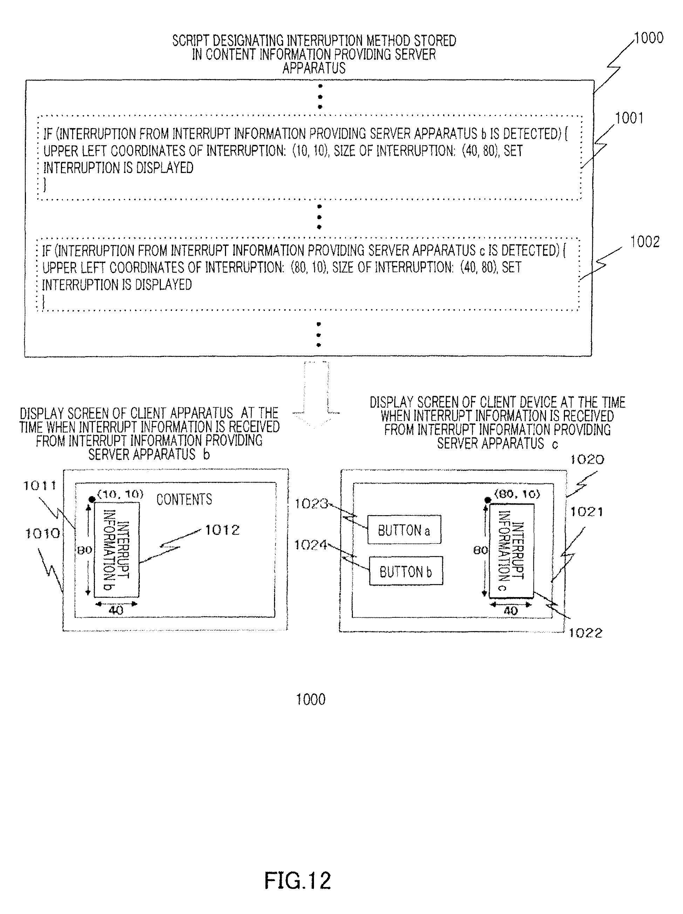

Next, processing operation (2) in interruption display system 600 shown in FIG.10 will be described, with reference to FIG.12.

Script 1000 stored in script storage section 621 describes the processing of different interrupt information displays to be performed to the interrupt information transmitted from interrupt information providing server apparatus b630 and interrupt information providing server apparatus c640. Source code 1001 describes the processing of designating the display method for the interrupt information transmitted from interrupt information providing server apparatus b630.

Source code 1002 describes the processing of designating the display method for the interrupt information transmitted from interrupt information providing server apparatus c640.

Interrupt information b1012 to be displayed when the interrupt information is received from interrupt information providing server apparatus 630 and interrupt information c1022 to be displayed when the interrupt information is received from interrupt information providing server apparatus 640 can be displayed at different positions, by way of designating different positions in respective interrupt information displays in line 2 of source code 1001 and line 2 of source code 1002. Presence/absence of the restriction of the input buttons can be specified individually in each interrupt information, by way of separately designating whether the display position of the interrupt information is displayed in such a manner as being overlapped on the input buttons, or is displayed in such a manner as avoiding the input buttons, for each interrupt information.

As described above, according to Embodiment 3, the interruption display can be performed by the display method suitable to the interrupt information received by client apparatus 610, by way of performing the processing of different interruption displays to the interrupt information transmitted from interrupt information providing server apparatus 630 and interrupt information providing server apparatus c640, based on the description of script 1000 stored in script storage section 621 in content information providing server apparatus 620.

Note that according to Embodiment 3, it is also acceptable to perform the interruption display by a display method suitable to the kind of the interrupt information (for example, displaying the interrupt information translucently and individually specifying whether the input buttons can be recognized, or the number of the input buttons prohibited to be operated is differentiated by displaying the interrupt information in such a manner as being overlapped on the input buttons), by way of describing, in script 1000, different interrupt information display methods suitable to the kind of the interrupt information (for example, text data, image data, video data, and the like).

Further, the processing of displaying only important interrupt information can be performed by client apparatus 610, by way of designating a level of interruption in each interrupt information.

As an example, it is also acceptable to cause client apparatus 610 to display only the interrupt information transmitted from the interrupt information providing server apparatus 630, by way of designating only the interrupt information of level 3 or higher to be displayed out of the interrupt information displayed by client apparatus 610, wherein the interrupt information transmitted from interrupt information providing server apparatus 630 is set as level 5 and the interrupt information transmitted from interrupt information providing server apparatus c640 is set as level 1.

The disclosures of Japanese Patent Application No. 2010-069636, filed on March 25, 2010, and Japanese Patent Application No. 2010-125600, filed on June 1, 2010, including the specifications, drawings and abstracts, are incorporated herein by reference in their entirety.

### Industrial Applicability

As described above, the display system according to the present invention is suitable for a system in which contents transmitted from a server apparatus is displayed by a client apparatus and interrupt information other than the contents is displayed.

### Reference Signs List

- 10: Client apparatus
- 11: Client apparatus control section
- 12: Communicating section b
- 13: Communicating section d
- 14: Display data generating section
- 15: Display section
- 20: Content information providing server apparatus
- 21: Content information providing server apparatus control section
- 22: Contents storage section
- 23: Script storage section
- 24: Communicating section a
- 30: Interrupt information providing server apparatus
- 31: Interrupt information providing server apparatus control section
- 32: Interruption detecting section
- 33: Communicating section c
- 50: Interruption display system

## Claims

1. An interruption display system, comprising:
a content information providing server apparatus that transmits contents and a script;
an interrupt information providing server apparatus that transmits interrupt information, which is information to be temporarily displayed; and
a client apparatus that receives the contents, the script, and the interrupt information, and displays the contents and displays the interrupt information based on the script, wherein:
the content information providing server apparatus comprises a script storage section that stores the script describing a display position of the interrupt information in the client apparatus,
the client apparatus comprises:
a display data generating section that displays the contents on a display section, the contents being received from the content information providing server apparatus; and
a client apparatus control section that displays the interrupt information on the display section, in accordance with a display position of the interrupt information described in the script received from the content information providing server apparatus, when the interrupt information is received from the interrupt information providing server apparatus while the contents are displayed on the display section.

2. The interruption display system according to claim 1, further comprising a plurality of the client apparatuses, wherein:
the script storage section of the content information providing server apparatus stores a script that describes a display position of the interrupt information in each of the plurality of client apparatuses; and
the client apparatus control section of each of the client apparatus displays the interrupt information on the display section, in accordance with the display position of the interrupt information of that client apparatus described in the script received from the content information providing server apparatus, when the interrupt information is received from the interrupt information providing server apparatus while the contents are displayed on the display section.

3. The display system according to claim 1, further comprising a plurality of the interrupt information providing server apparatuses, wherein:
the script storage section of the content information providing server apparatus stores the script that describes the display position of the interrupt information in the client apparatus, the interrupt information being transmitted from each of the plurality of the interrupt information providing server apparatuses, and
the client apparatus control section of the client apparatus displays the interrupt information on the display section, in accordance with the display position of the interrupt information described in the script received from the content information providing server apparatuses, when the interrupt information is received from any one of the plurality of the interrupt information providing server apparatuses while the contents are displayed on the display section.

4. A content information providing server apparatus that is connected to a client apparatus that displays contents and receives interrupt information, which is information to be temporarily displayed, from an interrupt information providing server apparatus, based on a script, and transmits the contents and the script to the client apparatus, the content information providing server apparatus comprising:
a contents storage section that stores the contents; and
a script storage section that stores the script, wherein:
the contents stored in the contents storage section include operation button information displayed by the client apparatus;
the script stored in the script storage section includes a description showing a display position of the interrupt information in the client apparatus; and
the description showing the display position of the interrupt information indicates a position where a display of the interrupt information is not overlapped on the display of the operating button information.

5. The content information providing server apparatus according to claim 4, the apparatus being connected to a plurality of the client apparatuses, wherein:
the contents stored in the contents storage section include operating button information displayed by each of the plurality of the client apparatuses;
the script stored in the script storage section includes a description showing a display position of the interrupt information in each of the plurality of the client apparatuses; and
the description showing the display position of the interrupt information indicates a position where the display of the interrupt information is not overlapped on the display of the operating button information.

6. The content information providing server apparatus according to claim 4, the apparatus being connected to the plurality of the interrupt information providing server apparatuses, wherein:
the script stored in the script storage section includes a description showing a display position of the interrupt information in the client apparatus of each of the interrupt information providing server apparatuses, and
the description showing the display position of the interrupt information in each of the interrupt information providing server apparatuses indicates a position where the display of each of the interrupt information is not overlapped on the display of the operating button information.

7. A content information providing server apparatus that is connected to a client apparatus that displays contents, and receives a script and interrupt information, which is information to be temporarily displayed, from an interrupt information providing server apparatus and displays the received interrupt information based on the script, and transmits the contents and the script to the client apparatus, the content information providing server apparatus comprising:
a contents storage section that stores the contents; and
a script storage section that stores the script, wherein:
the contents stored in the contents storage section include operating button information displayed by the client apparatus;
the script stored in the script storage section includes a description showing a display position of the interrupt information in the client apparatus; and
the description showing the display position of the interrupt information indicates a position where the display of the interrupt information is overlapped on the display of the operating button information.

8. The content information providing server apparatus according to claim 7, the apparatus being connected to the plurality of the client apparatuses, wherein:
the contents stored in the contents storage section include operating button information displayed by each of the plurality of the client apparatuses;
the script stored in the script storage section includes a description showing a display position of the interrupt information in each of the plurality of the client apparatuses; and
the description showing the display position of the interrupt information indicates a position where the display of the operating button information and the display of the interrupt information are overlapped on each other in at least one of the plurality of the client apparatuses.

9. The content information providing server apparatus according to claim 7, the apparatus being connected to a plurality of the interrupt information providing server apparatuses, wherein:
the script stored in the script storage section includes a description showing a display position of the interrupt information in the client apparatus in each of the interrupt information providing server apparatuses, and
at least one of the descriptions showing the display position of the interrupt information in each of the interrupt information providing server apparatuses indicates a position where the display of the interrupt information is overlapped on the display of the operating button information.

10. A client apparatus that receives contents and a script from a content information providing server apparatus, receives interrupt information, which is information to be temporarily displayed, from an interrupt information providing server apparatus, and displays the contents and also displays the interrupt information based on the script, the script including a description showing a display position of the interrupt information, the client apparatus comprising:
a display data generating section that displays the contents on a display section, the contents having been received from the content information providing server apparatus; and
a client apparatus control section that controls the interrupt information to be displayed, in accordance with a display position described in the script received from the content information providing server apparatus, when the interrupt information is received from the interrupt information providing server apparatus while the contents are displayed.
